Europäisches Patentamt

European Patent Office

Office européen des brevets

(19)

(11) Veröffentlichungsnummer: **0 156 338**
**B1**

(12) # EUROPÄISCHE PATENTSCHRIFT

(45) Veröffentlichungstag der Patentschrift: **05.12.90**

(21) Anmeldenummer: **85103462.9**

(22) Anmeldetag: **23.03.85**

(51) Int. Cl.⁵: **B 60 R 11/06,** A 45 C 11/24, E 05 D 1/02

(54) **Pannenkoffer für Kraftfahrzeuge.**

(30) Priorität: **27.03.84 DE 3411219**

(43) Veröffentlichungstag der Anmeldung:
**02.10.85 Patentblatt 85/40**

(45) Bekanntmachung des Hinweises auf die Patenterteilung:
**05.12.90 Patentblatt 90/49**

(84) Benannte Vertragsstaaten:
**AT CH DE FR GB IT LI SE**

(56) Entgegenhaltungen:
**DE-U-7 625 257**
**DE-U-7 629 264**
**GB-A- 224 748**
**US-A-3 516 115**
**US-A-3 653 567**

(73) Patentinhaber: **Grimm, Walter, Dipl.-Ing.**
**Forsthausstrasse 32**
**D-6110 Dieburg (DE)**

(72) Erfinder: **Grimm, Walter, Dipl.-Ing.**
**Forsthausstrasse 32**
**D-6110 Dieburg (DE)**

(74) Vertreter: **Katscher, Helmut, Dipl.-Ing.**
**Bismarckstrasse 29**
**D-6100 Darmstadt (DE)**

EP 0 156 338 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft einen Pannenkoffer für Kraftfahrzeuge, mit zwei am Kofferboden klappbar miteinander verbundenen, jeweils eine Kofferseitenfläche bildenden Kofferschalen und einem angeformten Tragegriff.

Derartige Pannenkoffer dienen zur Aufnahme der bei Pannen und Unfällen benötigten Ausrüstungsgegenstände, Werkzeuge und Ersatzteile, die anderenfalls nur unzureichend verpackt oder gesichert im Kofferraum oder im Wageninnenraum liegen und dort nicht nur stören, sondern auch im Ernstfall nur schlecht auffindbar sind. Pannenkoffer mit im wesentlichen quaderförmiger Außenform sind jedoch verhältnismäßig sperrig und stören deshalb im Kofferraum, insbesondere wenn andere, sperrige Gepäckstücke untergebracht werden müssen.

Im Bedarfsfall müssen die benötigten Ausrüstungsgegenstände dem Pannenkoffer einzeln entnommen werden; wenn mehrere Ausrüstungsgegenstände abwechselnd benötigt werden, müssen diese in der Zwischenzeit auf dem Erdboden oder im Kofferraum abgelegt werden.

Aufgabe der Erfindung ist es daher, einen Pannenkoffer der eingangs genannten Gattung zu schaffen, der im Kofferraum des Kraftfahrzeugs platzsparend unterzubringen ist und aus dem die jeweils benötigten Ausrüstungsgegenstände od.dergl. bei Bedarf leicht entnommen und darin wieder abgelegt werden können.

Diese Aufgabe wird erfindungsgemäß dadurch gelöst, daß eine der beiden Kofferschalen in der Kofferseitenfläche eine zum Kofferboden und zu einer der beiden Schmalseiten des Pannenkoffers auslaufende Einsenkung aufweist, und daß beide Kofferschalen jeweils einen Formeinsatz enthalten, der zur gemeinsamen Teilungsebene beider Kofferschalen geöffnete Fächer aufweist.

Die an einer Seitenfläche des Pannenkoffers unten und seitlich vorgesehene Einsenkung ist an den bei nahezu allen Kraftfahrzeugen in den Kofferraum ragenden Radkasten angepaßt und ermöglicht somit eine sehr platzsparende Unterbringung des Pannenkoffers an der Seite des Kofferraums des Kraftfahrzeugs unmittelbar im Anschluß an den Radkasten. Die Abmessungen des Pannenkoffers und der seitlichen Einsenkung können in besonderer Anpassung an den beim jeweiligen Fahrzeugtyp zur Verfügung stehenden Platz gewählt werden, wobei auch noch eine weitere Profilierung der einen Kofferschale zur Anpassung an die Form der Kofferraum-Seitenwand möglich ist.

Die beiden Kofferschalen können im geöffneten Zustand voneinander gelöst werden, so daß jede einzelne Kofferschale mit ihrer offenen Seite nach oben neben dem Fahrzeug abgelegt werden kann. Die darin enthaltenen Ausrüstungsgegenstände sind dadurch nicht nur sehr gut zugänglich, sondern können auch jederzeit wieder in der Kofferschale abgelegt werden. Dadurch wird vermieden, daß die Ausrüstungsgegenstände verschmutzen oder verlorengehen oder im Bedarfsfall nicht sofort greifbar sind. Jedem Ausrüstungsgegenstand ist in dem Formeinsatz der Kofferschale ein besonderes Fach zugeordnet, in dem er jederzeit wieder abgelegt werden kann.

Zweckmäßigerweise ist die die Einsenkung aufweisende Kofferschale tiefer als die andere Kofferschale. Damit wird erreicht, daß sich auch eine verhältnismäßig tiefe Einsenkung, die durch die Abmessungen des Radkastens bedingt ist, nur in die eine Kofferschale erstreckt, während die andere Kofferschale rechtwinklig und ohne Einsenkungen ausgeführt werden kann.

In weiterer Ausgestaltung des Erfindungsgedankens ist vorgesehen, daß die Formeinsätze der beiden Kofferschalen jeweils an ihrer Innenfläche eine herausnehmbare, als Anfahrhilfe verwendbare profilierte flexible Matte tragen. Diese Matten verschließen nicht nur die jeweils zugehörige Kofferschale auch nach dem Öffnen des pannenkoffers, so daß dessen Inhalt auch bei Regen oder Schnee im geöffneten Zustand des Pannenkoffers noch geschützt ist, sondern stehen auch als Anfahrhilfe zum Unterlegen unter die auf glattem Boden durchdrehenden Antriebsräder oder als feuchtigkeitsdichte Unterlagen zur Verfügung, auf die man sich bei Reparaturarbeiten knien kann.

Gemäß einer besonders bevorzugten Ausführungsform der Erfindung ist vorgesehen, daß die beiden Kofferschalen durch Scharniere miteinander verbunden sind, die jeweils zwei durch eine biegsame Scharnierlasche miteinander verbundenen Befestigungsbeschläge aufweisen, und daß die Scharnierlasche in einen der beiden Befestigungsbeschläge lösbar einrastend eingesteckt ist. Diese Scharniere dienen nicht nur zur klappbaren Verbindung der beiden Kofferschalen, sondern ermöglichen es auch, die beiden Kofferschalen in sehr einfacher Weise voneinander zu lösen, so daß die Kofferschalen einzeln oder beide geöffnet auf dem Boden abgelegt werden können, damit ihr Inhalt bequem zugänglich zur Verfügung steht.

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist. Es zeigt:

Fig. 1 einen Pannenkoffer in Seitenansicht,

Fig. 2 einen Schnitt längs der Linie II-II in Fig. 1,

Fig. 3 einen Schnitt längs der Linie III-III in Fig. 1,

Fig. 4 einen Schnitt längs der Linie IV-IV in Fig. 1,

Fig. 5 einen Schnitt längs der Linie V-V in Fig. 1,

Fig. 6 einen Schnitt längs der Linie VI-VI in Fig. 1,

Fig. 7 einen Schnitt längs der Linie VII-VII in Fig. 1,

Fig. 8 eine Innenansicht der einen, gefüllten Kofferschale,

Fig. 9 eine Innenansicht der anderen, gefüllten Kofferschale,

Fig. 10 eine vergrößerte Ansicht, teilweise im Schnitt, des Scharniers,

Fig. 11 einen Schnitt längs der Linie XI-XI in Fig. 10,

Fig. 12 einen Schnitt längs der Linie XII-XII in Fig. 10 und

Fig. 13 einen Schnitt längs der Linie XIII-XIII in Fig. 10.

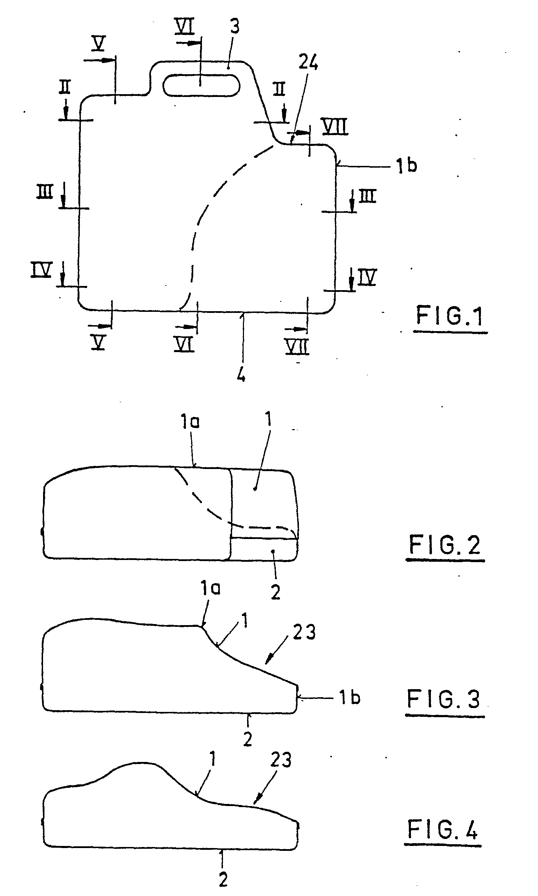

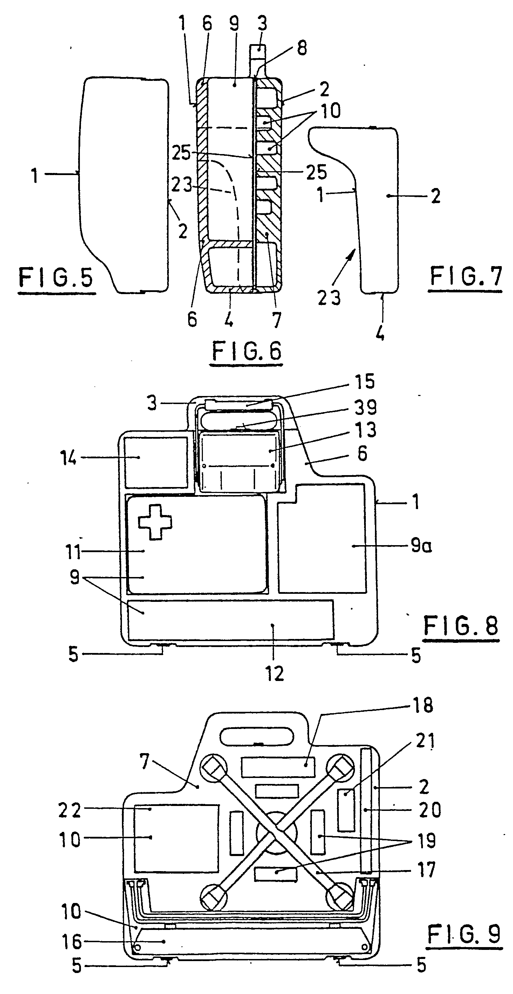

Der in den Fig. 1 bis 9 dargestellte Pannenkoffer für Kraftfahrzeuge besteht aus zwei Kofferschalen 1, 2, die jeweils eine Kofferseitenfläche bilden und an denen jeweils die Hälfte eines Tragegriffs 3 angeformt ist. Die beiden Kofferschalen sind am Kofferboden 4 durch zwei Scharniere 5 (Fig. 8) klappbar miteinander verbunden.

In jeder Kofferschale 1, 2 ist ein Formeinsatz 6 bzw. 7 enthalten, beispielsweise aus Schaumstoff, der jeweils bis zur gemeinsamen Teilungsebene 8 des Pannenkoffers reicht und mehrere nach dort geöffnete Fächer 9 bzw. 10 aufweist.

Wie man aus den Fig. 8 und 9 erkennt, dienen die Fächer 9 bzw. 10 zur Aufnahme von Ausrüstungsgegenständen, Ersatzteilen, Werkzeugen od. dergl., die bei einer Panne oder in einer ähnlichen Situation benötigt werden könnten. So ist in Fig. 8 beispielsweise gezeigt, daß in der einen Kofferschale 1 ein Erste-Hilfe-Kasten 11, ein Abschleppseil 12, eine Warn- bzw. Handleuchte 13 und ein Behälter 14 mit Ersatzbirnen untergebracht werden kann. In einem Fach 9a können Arbeitshandschuhe aufgenommen werden. Das die Leuchte 13 aufnehmende Fach schließt sich an den Tragegriff 3 an, der hohl ausgeführt ist und der wie dargestellt den Tragegriff 15 der Leuchte 13 aufnimmt. Dadurch wird eine besonders platzsparende Unterbringung der Leuchte 13 erreicht.

Im Formeinsatz 7 der anderen Kofferschale 2 sind beim dargestellten Ausführungsbeispiel ein Warndreieck 16, ein Kreuzschlüssel 17, ein Behälter 18 mit Sicherungen, Zündkerzen 19, ein Maßstab 20, Kreide 21 und Putzlappen 22 untergebracht.

Aus den Fig. 1 bis 7 ist zu erkennen, daß die eine Kofferschale 1 in der einen Kofferseitenfläche 1a eine Einsenkung 23 aufweist, die zum Kofferboden 4 und zu einer der beiden Schmalseiten 1b des Pannenkoffers ausläuft. Diese Einsenkung ermöglicht es, den Pannenkoffer platzsparend an der Seite des Kofferraums des Kraftfahrzeugs unterzubringen, wobei die Einsenkung 23 einen Teil des in den Kofferraum ragenden Radkastens aufnimmt. Wie man insbesondere aus Fig. 4 erkennt, kann die Kofferschale 1 noch weiter profiliert sein, um sich an die Form der Kofferraum-Seitenwand des jeweiligen Kraftfahrzeugs anzupassen. An der Oberseite des Pannenkoffers kann eine Stufe 24 (Fig. 1) vorgesehen sein, die Platz für in den Kofferraum ragende Einbauten schafft, beispielsweise für das Scharnier des Kofferraumdeckels. Die seitlichen Einsenkungen und Profilierungen des Pannenkoffers sind beim dargestellten Ausführungsbeispiel nur in der tieferen Kofferschale 1 vorgesehen, während die flachere Kofferschale 2 mit Ausnahme der Stufe 24 angenähert rechtwinklig ausgeführt ist.

In der Teilungsebene 8 der beiden Kofferschalen 1, 2 sind zwei herausnehmbare, profilierte flexible Matten 25 angeordnet (Fig. 6) die die Innenseiten der Formeinsätze 6 bzw. 7 verschließen und die nach dem Herausnehmen als Anfahrhilfen unter die Antriebsräder des Kraftfahrzeugs gelegt werden können.

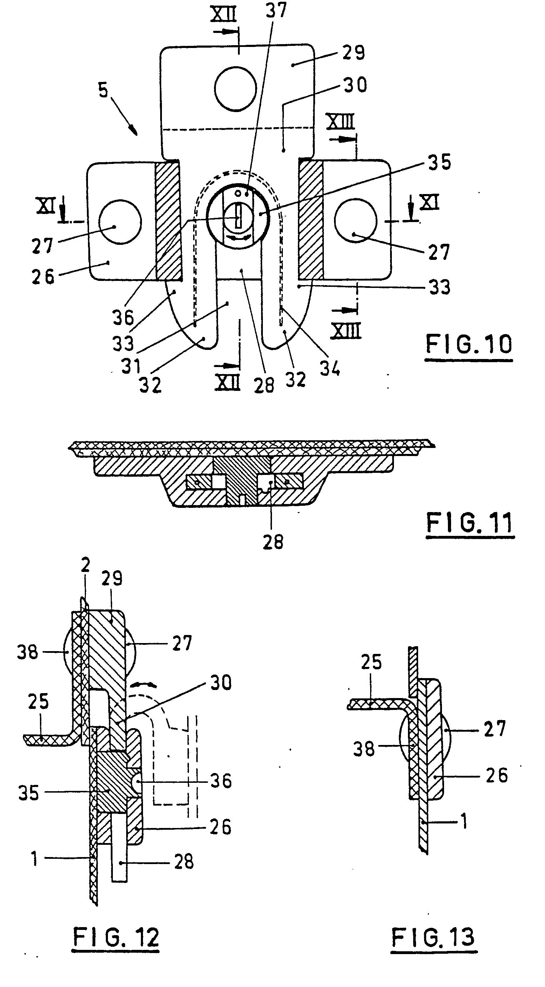

Einzelheiten der die beiden Kofferschalen 1, 2 verbindenden Scharniere 5 sind in den Fig. 10 bis 13 dargestellt. Ein Befestigungsbeschlag 26, der durch Niete 27, Druckknöpfe, Schrauben, Schweißverbindung, Klebeverbindung od. dgl. an der Kofferschale 1 angebracht ist, weist einen parallel zur Befestigungsebene verlaufenden Einsteckschlitz 28 auf. An der anderen Kofferschale 2 ist in ähnlicher Weise ein Befestigungsbeschlag 29 angebracht, der in eine biegsame Scharmierlasche 30 übergeht. Die Scharnierlasche 30 weist zwei durch einen Längsschlitz 31 voneinander getrennte, federnd gegeneinander verbiegbare Einsteckzungen 32 auf, die in den Einsteckschlitz 28 eingesteckt werden können, wie in den Fig. 10, 11 und 12 gezeigt.

Jeweils an ihren einander abgekehrten Seitenflächen weisen die Einsteckzungen 32 einen hakenartigen Rastvorsprung 33 auf, der beim Einstecken am Befestigungsbeschlag 26 einrastet. Um die Federwirkung der Einsteckzungen 32 zu verstärken, ist eine U-förmige Federstahleinlage 34 vorgesehen.

Ein verdrehbarer Sperreinsatz 35 ist von der Befestigungsfläche her in den Befestigungsbeschlag 26 eingesetzt und weist eine von der Außenseite des Befestigungsbeschlags 26 her zugängliche Schlüsselausnehmung 36 auf, die es ermöglicht, den Sperreinsatz 35 zu drehen. Das Mittelteil des Sperreinsatzes 35 bildet einen im Querschnitt länglichen Sperrknebel 37, der bei einer Drehung des Sperreinsatzes 35 zwischen einer Sperrstellung, in der er die einander zugekehrten Innenflächen der Einsteckzungen 32 gegenseitig abstützt, und einer in den Fig. 10, 11 und 12 gezeigten Lösestellung verdrehbar ist, in der er die Einsteckzungen 32 zur Verformung freigibt. In dieser Stellung können die Einsteckzungen 32 so gegeneinander gedrückt werden, daß die Rastvorsprünge 33 am Befestigungsbeschlag 26 ausgehakt werden, um die beiden Kofferschalen 1, 2 voneinander zu lösen.

In Fig. 12 ist mit gestrichelten Linien die aufgeklappte Stellung des Scharniers 5 dargestellt, wobei die beiden Kofferschalen 1, 2 noch miteinander verbunden sind.

Fig. 13 zeigt die Befestigung des Befestigungsbeschlags 26 an der Kofferschale 1. Man erkennt in den Fig. 12 und 13, daß die ausknöpfbaren Matten 25 an den jeweils zugeordneten Kofferschalen 1 bzw. 2 mit Druckknöpfen 38 befestigt sind.

Ein Verschluß 39, mit dem die beiden Kofferschalen 1, 2 im Bereich des Tragegriffes 3 miteinander verbunden werden, kann in gleicher Weise wie das beschriebene Scharnier 5 ausgeführt sein.

**Patentansprüche**

1. Pannenkoffer für Kraftfahrzeuge, mit zwei am Kofferboden (4) klappbar miteinander verbundenen, jeweils eine Kofferseitenfläche bildenden Kofferschalen (1, 2) und einem angeformten Tragegriff (3), dadurch gekennzeichnet, daß eine der beiden Kofferschalen (1) in der Kofferseitenfläche (1a) eine zum Kofferboden (4) und zu einer der beiden Schmalseiten (1b) des Pannenkoffers auslaufende Einsenkung (23) aufweist, und daß beide Kofferschalen (1, 2) jeweils einen Formeinsatz (6, 7) enthalten, der zur gemeinsamen Teilungsebene (8) beider Kofferschalen (1, 2) geöffnete Fächer (9, 10) aufweist.

2. Pannenkoffer nach Anspruch 1, dadurch gekennzeichnet, daß die die Einsenkung (23) aufweisende Kofferschale (1) tiefer als die andere Kofferschale (2) ist.

3. Pannenkoffer nach Anspruch 1, dadurch gekennzeichnet, daß die Formeinsätze (6, 7) der beiden Kofferschalen (1, 2) jeweils an ihrer Innenfläche eine herausnehmbare, als Anfahrhilfe verwendbare profilierte flexible Matte (25) tragen.

4. Pannenkoffer nach Anspruch 1, dadurch gekennzeichnet, daß der Tragegriff (3) mindestens einer der beiden Kofferschalen (1 bzw. 2) hohl ist und sich an ein Fach (9 bzw. 10) zur Aufnahme einer Warnleuchte (13) in dem einen Formeinsatz (6) anschließt.

5. Pannenkoffer nach Anspruch 1, dadurch gekennzeichnet, daß die beiden Kofferschalen (1, 2) durch Scharniere (5) miteinander verbunden sind, die jeweils zwei durch eine biegsame Scharnierlasche (30) miteinander verbundene Befestigungsbeschläge (26, 29) aufweisen, und daß die Scharnierlasche (30) in einen der beiden Befestigungsbeschläge (26) lösbar einrastend eingesteckt ist.

6. Pannenkoffer nach Anspruch 5, dadurch gekennzeichnet, daß der eine Befestigungsbeschlag (26) einen parallel zur Befestigungsebene verlaufenden Einsteckschlitz (28) aufweist und daß die Scharnierlasche (30) zwei durch einen Längsschlitz (31) voneinander getrennte, federnd gegeneinander verbiegbare Einsteckzungen (32) aufweist, die jeweils an ihren einander abgekehrten Seitenflächen einen Rastvorsprung (33) aufweisen.

7. Pannenkoffer nach Anspruch 6, dadurch gekennzeichnet, daß in der Mitte des Einsteckschlitzes (28) ein Sperrknebel (37) zwischen einer die einander zugekehrten Innenflächen der Einsteckzungen (32) abstützenden Sperrstellung und einer die Einsteckzungen (32) zur Verformung freigebenden Lösestellung verdrehbar ist.

8. Pannenkoffer nach Anspruch 7, dadurch gekennzeichnet, daß der Sperrknebel (37) Teil eines verdrehbaren Sperreinsatzes (35) ist, der von der Befestigungsfläche her in den Befestigungsbeschlag (26) eingesetzt ist und eine von der Außenseite des Befestigungsbeschlags (26) her zugängliche Schlüsselausnehmung (36) aufweist.

9. Pannenkoffer nach Anspruch 5, dadurch gekennzeichnet, daß die beiden Kofferschalen (1, 2) an der den Scharnieren (5) gegenüberliegenden Seite durch mindestens ein weiteres lösbares Scharnier (39) als Kofferverschluß miteinander verbunden sind.

**Revendications**

1. Coffre de dépannage pour véhicules automobiles avec deux coques de coffre (1, 2) formant chacune une face latérale du coffre et assemblées de manière amovible sur le fond du coffre (4), et une poignée de transport formée (3), caractérisé en ce que l'une des deux coques de coffre (1) présente, dans la face latérale du coffre (1a) un renfoncement (23) s'étendant jusqu'au fond du coffre (4) et jusqu'à l'un des deux côtés étroits (1b) du coffre de dépannage, et en ce que les deux coques de coffre (1, 2) contiennent chacune un insert de forme (6, 7) qui présente des compartiments (9, 10) ouverts vers le plan de séparation commun (8) des deux coques de coffre (1, 2).

2. Coffre de dépannage selon la revendication 1, caractérisé en ce que la coque de coffre (1) présentant le renfoncement (23) est plus profonde que l'autre coque de coffre (2).

3. Coffre de dépannage selon la revendication 1, caractérisé en ce que les inserts de forme (6, 7) des deux coques de coffre (1, 2) portent chacun sur leur face intérieure une natte (25) flexible, profilée et amovible, pouvant être utilisée comme auxiliaire de démarrage.

4. Coffre de dépannage selon la revendication 1, caractérisé en ce que la poignée de support (3) d'au moins l'une des deux coques de coffre (1 ou 2) est creuse et qu'elle se raccorde à un compartiment (9 ou 10) pour recevoir une lampe d'alarme (13) dans l'insert de forme (6).

5. Coffre de dépannage selon la revendication 1, caractérisé en ce que les deux coques de coffre (1, 2) sont assemblées l'une à l'autre par des charnières qui présentent chacune deux armatures de fixation (26, 29) assemblées l'une à l'autre par une éclisse de charnière flexible (30) et en ce que l'éclisse de charnière (30) est insérée en s'emboîtant de manière amovible dans l'une des deux armatures de fixation (26).

6. Coffre de dépannage selon la revendication 5, caractérisé en ce qu'une armature de fixation (26) présente une fente d'insertion (28) disposée parallèlement au plan de fixation et en ce que l'éclisse de charnière (30) présente deux languettes d'insertion (32) pouvant se replier élastiquement l'une contre l'autre et séparées l'une de l'autre par une fente longitudinale (31), ces languettes présentant chacune une saillie d'emboîtement (33) sur leurs faces latérales opposées l'une à l'autre.

7. Coffre de dépannage selon la revendication 6, caractérisé en ce que, au milieu de la fente d'insertion (28), une manette de blocage (37) peut tourner entre une position de blocage supportant les surfaces intérieures tournées l'une vers l'autre des languettes d'insertion (32) et une position de dégagement dégageant les languettes d'insertion (32) pour permettre leur déformation.

8. Coffre de dépannage selon la revendication 7, caractérisé en ce que la manette de blocage (37) fait partie d'un insert de blocage pivotant (35) qui est inséré dans l'armature de fixation (26) depuis la surface de fixation et qui présente une cavité de clé (36) accessible du côté extérieur de l'armature de fixation (26).

9. Coffre de dépannage selon la revendication 5, caractérisé en ce que les deux coques de coffre (1, 2) sont assemblées sur le côté opposé aux charnières (5) par au moins une autre charnière amovible (39) servant de fermeture de coffre.

**Claims**

1. Breakdown box for motor vehicles, having two box shells (1, 2) joined in a hinged manner to each other at the bottom (4) of the box, in each case forming one side of the box, and having a moulded-on carrying handle (3), characterised in that one of the two box shells (1) has in the box side face (1a) a depression (23) running to the bottom (4) of the box and to one of the two narrow sides (1b) of the breakdown box, and that the two box shells (1, 2) each contain a moulded insert (6, 7) which has compartments (9, 10) open to the common dividing plane (8) of the two box shells (1, 2).

2. Breakdown box according to Claim 1, characterised in that the box shell (1) having the depression (23) is deeper than the other box shell (2).

3. Breakdown box according to Claim 1, characterised in that the moulded inserts (6, 7) of the two box shells (1, 2) each have on their inside face a removable profiled flexible mat (25) which can be used as a starting aid.

4. Breakdown box according to Claim 1, characterised in that the carrying handle (3) of at least one of the two box shells (1 or 2) is hollow and is adjacent to a compartment (9 or 10) for holding a warning lamp (13) in the one moulded insert (6).

5. Breakdown box according to Claim 1, characterised in that the two box shells (1, 2) are joined to each other by hinges (5) which in each case have two attachment mounts (26, 29) joined to each other by a flexible hinge plate (30), and that the hinge plate (30) is inserted so that it can be detachably clipped into one of the two attachment mounts (26).

6. Breakdown box according to Claim 5, characterised in that the one attachment mount (26) has an insert slot (28) running parallel to the attachment plane and that the hinge plate (30) has two insert lugs (32) separated from each other by a lengthwise slot (31), which can be bent resiliently against each other, each of which has a projecting catch (33).

7. Breakdown box according to Claim 6, characterised in that, in the centre of the insert slot (28) a locking handle (37) can be rotated between a locking position supporting the inner faces of the insert lugs (32) turned towards each other and a release position which releases the insert lugs (32) for deformation.

8. Breakdown box according to Claim 7, characterised in that the locking handle (37) is part of a rotatable locking insert (35) which is inserted from the attachment face into the attachment mount (26) and has a key recess (36) accessible from the external side of the attachment mount (26).

9. Breakdown box according to Claim 5, characterised in that the two box shells (1, 2) are joined to each other on the side opposite to the hinges (5) by at least one other detachable hinge (39) as a box lock.

FIG.1

FIG.2

FIG.3

FIG.4

FIG.5

FIG.6

FIG.7

FIG.8

FIG.9

2

FIG.10

FIG.11

FIG.12

FIG.13

3